# EUROPEAN PATENT SPECIFICATION

(11) **EP 3 326 483 B1**
(45) Date of publication and mention of the grant of the patent: **19.06.2019**
(21) Application number: 17202684.1
(22) Date of filing: 21.11.2017
(51) Int. Cl.: A43D 3/00, A43D 3/10, B29D 35/00, A43B 5/04

(54) **LAST FOR OBTAINING A SHELL OF A BOOT PROVIDED WITH A RIGID SOLE**
LEISTEN ZUR HERSTELLUNG EINER SCHALE EINES STIEFELS MIT EINER STARREN SOHLE
FORME POUR OBTENIR UNE COQUE D'UNE CHAUSSURE POURVUE D'UNE SEMELLE RIGIDE

(30) Priority: 24.11.2016 IT 201600118887
(43) Date of publication of application: 30.05.2018
(73) Proprietor: FMB S.R.L., 31041 Cornuda TV (IT)
(72) Inventor: BUZIOL, Renato, 31035 Crocetta Del Montello TV (IT)
(74) Representative: Modiano, Micaela Nadia

(56) References cited:
- DE-C- 860 911
- US-A- 3 380 123
- US-A- 3 853 446

## Description

The present invention relates to a last for obtaining a shell of a boot provided with a rigid sole.

Nowadays, to make alpine ski boots that are constituted by a shell made of plastic material and provided with a rigid sole, it is known to refer to the DIN ISO 9523 standard which specifies the dimensions, the characteristics, the requirements, the test methods and the marking of boots with a rigid sole that are used with current ski bindings in the toe region and in the heel region in order to obtain an optimal degree of safety.

Within such reference standard, which entails the insertion, both in the toe region and in the heel region, of metal inserts that are adapted to mechanically engage the components of dedicated bindings for this specialism, a specific approach to the construction of the molds has been developed for integrating such fittings in the structure of the shoe.

In order to insert the metal insert in the heel region, it is mounted manually on the molded blank (or shell) by way of fixing with a screw.

Differently, for the toe region a metal plate is used which has to be integrated directly onto the shell during molding as an overmolded component.

This process entails the positioning of the plate, by an operator on board the machine, on the left and right lasts of the mold on which some dedicated centering elements (or cylindrical pins) have been arranged to keep the piece in position during the step of injecting the thermoplastic material.

One drawback that is found in the known art consists in that the positioning described above creates complications during the step of unseating the molded items from the lasts proper, because the centering elements or the cylindrical pins mechanically hinder the unseating, by rubbing against the seat of the metal plate.

Further complications affect such drawback when particularly rigid materials, which are typical in making ski boots, are overmolded on the last: such operating step is lengthy and, by virtue of the deformations that can result, gives rise to very costly production discards.

Furthermore, in some cases it may not be possible to remove the molded items, thus requiring the use of measures that are very costly and not always fruitful.

In order to seek to overcome the above mentioned drawbacks, it is known to modify the centering pins by beveling one side thereof in order to facilitate their disengagement from the seats of the metal plate during the step of unseating.

However, this known art also entails drawbacks in that it results in a deterioration of the fixing of the plate, both with regard to the mechanical grip on the last and with regard to precision in the positioning.

As a consequence, such drawbacks give rise to an acute misalignment between the plate arranged in the toe region and the insert situated in the heel region, such that a correct operation of the binding used to lock the boot to the ski is not ensured, so that the safety of the skier is compromised.

In other cases, it is found that the plate exits from the seat when the mold is being closed, which results in damage to its components (shells and lasts), resulting in production discards with increase of costs and forcing shutdowns of production which lead to losses in terms of both time and money.

US3853446 discloses an apparatus for manufacturing ski-boot shells. The aim of the present invention is to eliminate the above mentioned drawbacks in the described known art, by providing a last for obtaining a shell of a boot provided with a rigid sole which can be unseated from the shell rapidly and simply, while at the same time keeping the shell intact and free from deformations during the step of unseating, thus obtaining a high quality and safety of the shell.

Within this aim, an object of the present invention is to obtain a last that reduces the times for producing and unseating the shell.

Another object of the invention is to provide a last that reduces the production costs of the shell, by limiting the production of discards.

Another object is to provide a last that makes it possible to obtain a shell that ensures an optimal and safe coupling with the bindings associated with skis.

A still further object is to provide an invention that is structurally simple and low cost and which can be made with the usual conventional plants.

This aim and these and other objects which will become better apparent hereinafter are achieved by a last 1, 101 for obtaining a shell 2 of a boot provided with a rigid sole 3 and, in the toe region 4, at least one metal plate 5a, 5b, characterized in that it comprises a main body 9 with which an insert 11, 111 is slideably associated, at said toe region 4, and can slide with respect to said main body 9 along a plane that is inclined by a different angle to the normal angle of extraction of said last 1, 101 from said shell 2, at least two bevel-free first pins 17a, 17b protruding downward from said insert 11, 111 and interacting selectively with said at least one metal plate 5a, 5b.

Further characteristics and advantages of the invention will become better apparent from the detailed description of a particular, but not exclusive, embodiment, which is illustrated by way of non-limiting example in the accompanying drawings wherein:
Figure 1 is a perspective view from below of the last;
Figure 2 is a first exploded view of the last;
Figure 3 is a second exploded view of the last;
Figure 4 is a partially cross-sectional view of the main body and the insert in the condition before the extraction;
Figure 5 is a view similar to the previous figure of the main body and the insert in the initial condition of extraction;
Figure 6 is a cross-sectional view of the last taken along the line VI-VI in Figure 1;
Figure 7 is a cross-sectional view of the last inserted into the shell, taken along the line VII-VII in Figure 1;
Figure 8 is a partially cross-sectional view taken along a longitudinal line of the last in a first step of unseating from the shell;
Figure 9 is a view similar to the previous figure of the last in a second step of unseating from the shell;
Figure 10 is a view similar to Figure 7 of the last in a third step of unseating from the shell;
Figure 11 is a view similar to the previous figure of the last in the final step of unseating the last from the shell;

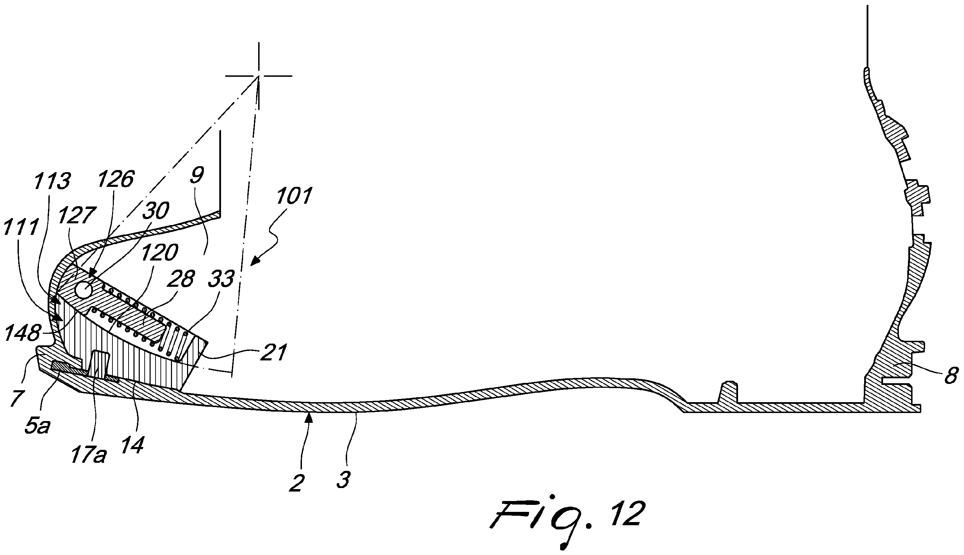

Figure 12 is a cross-sectional view of the last, in a variation of embodiment thereof, inserted into the shell, taken along the line XII-XII in Figure 1;
Figure 13 is a view similar to the previous figure of the last in a step of unseating from the shell.

In the embodiments illustrated below, individual characteristics shown in relation to specific examples may in reality be interchanged with other, different characteristics, existing in other embodiments.

Moreover, it should be noted that anything found to be already known during the patenting process is understood not to be claimed and to be the subject of a disclaimer.

With reference to the figures, the reference numeral 1, 101 generally designates a last for obtaining a shell 2 of a boot provided with a rigid sole 3 and, in the toe region 4, at least one metal plate 5a, 5b.

In the specific embodiment shown by way of non-limiting example, the shell 2 is provided internally, proximate to the toe region 4, with two metal plates 5a, 5b which are arranged mutually side by side, each one with a first hole 6 accessible from inside the shell 2.

The last 1, 101 has a shape structure that substantially corresponds to that of the inside of the shell 2 of a boot and therefore lacks the toe unit 7 and the heel unit 8.

Such last 1, 101 is constituted by a main body 9, which reproduces the internal shape structure of the shell 2 except for part of the region 4, which corresponds to the toe of the foot, in which a flat recess 10 is obtained at which an insert 11, 111, which is shaped complementarily to the region 4, is slideably associated.

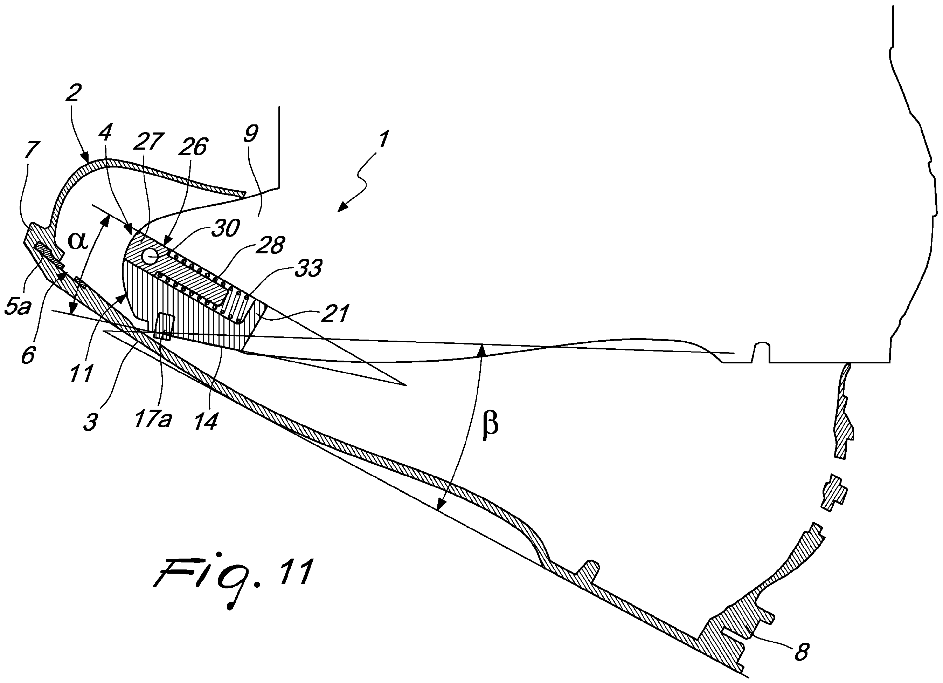

The insert 11, 111 is slideable with respect to the main body 9 of the last 1, 101 according to a plane that is inclined by a different angle α (alpha) to the normal angle β (beta) of extraction of the shell 2 from the last 1, 101, as shown in Figure 11.

The insert 11, 111 has, in a transverse cross-section, a base 12 with a substantially rectangular shape structure from which a first head 13, 113 protrudes axially with a shape structure, in a transverse cross-section, substantially like an upside-down isosceles trapezoid, whereas in plan view the insert 11, 111 has a substantially semicircular shape structure.

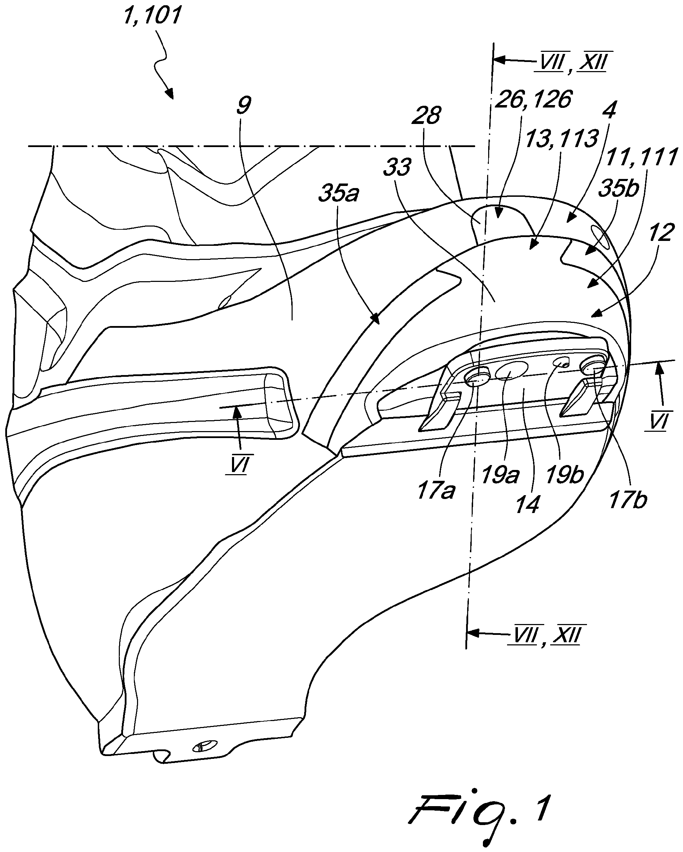

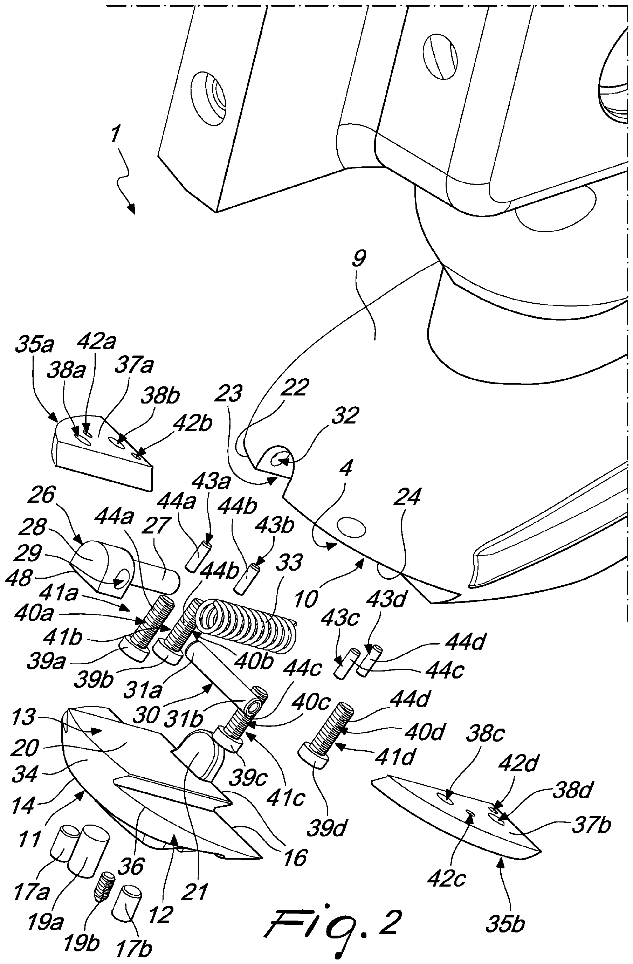

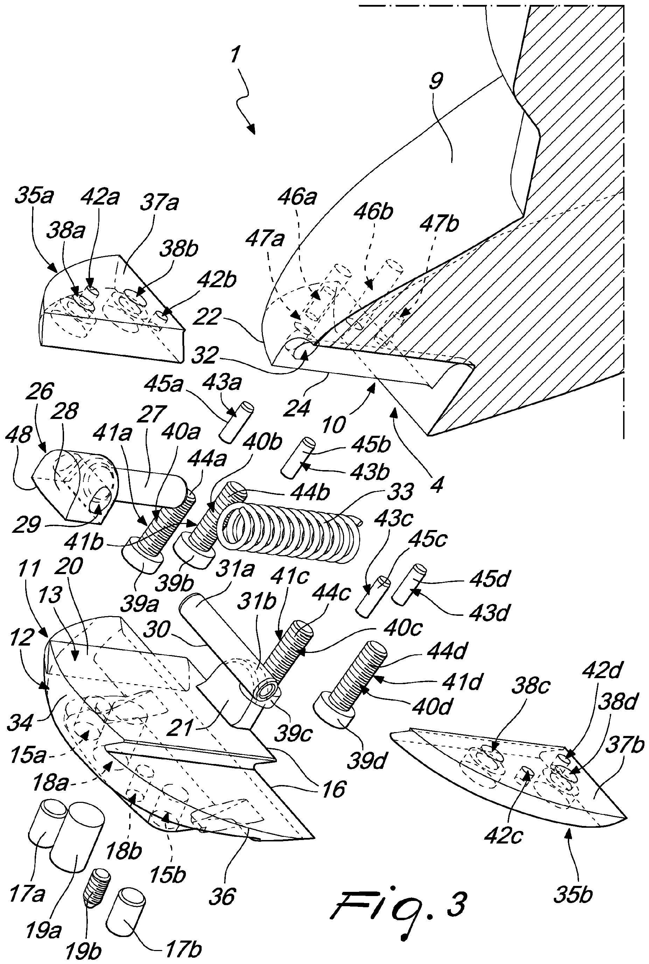

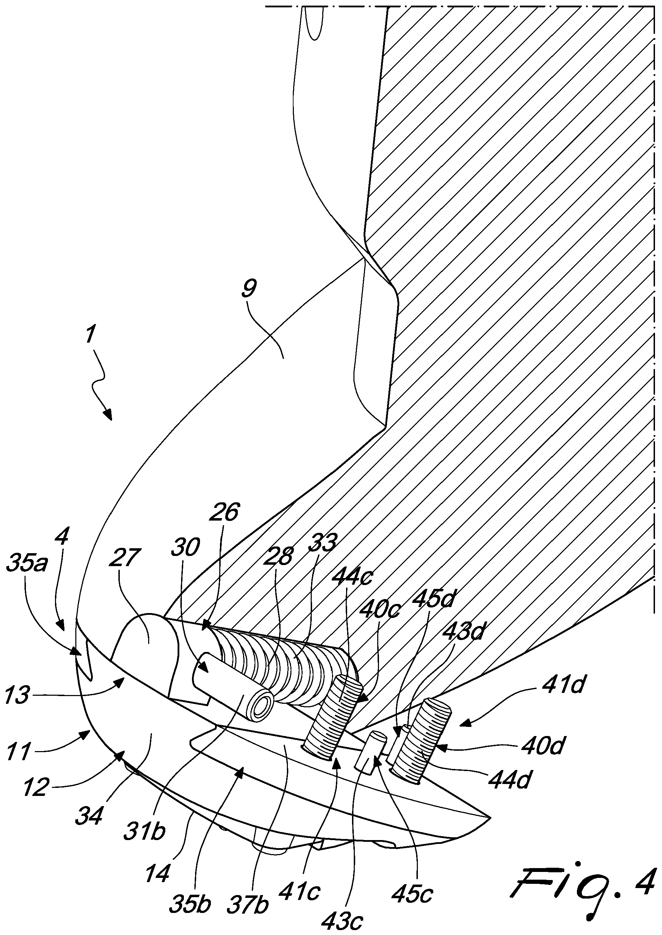

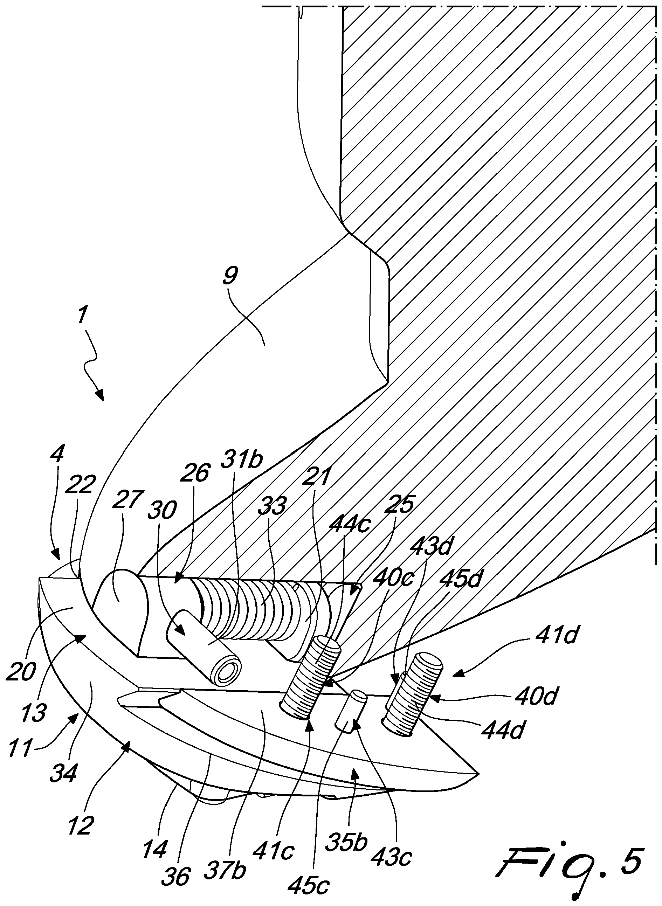

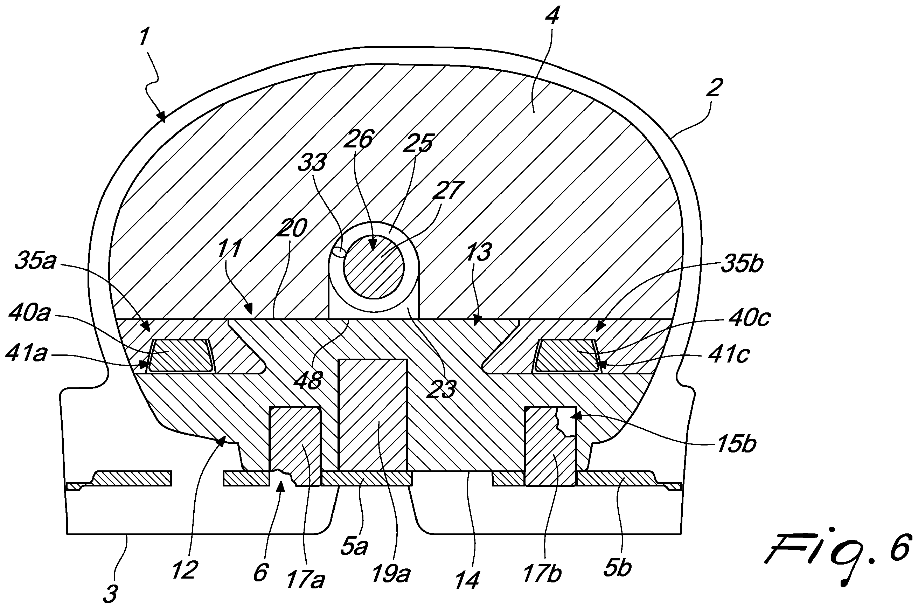

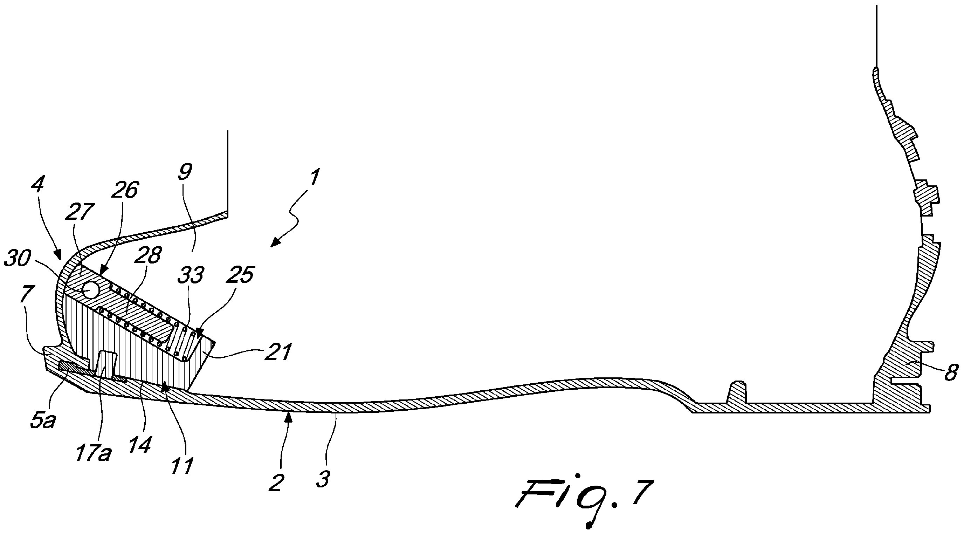

In the specific embodiment shown from Figure 1 to Figure 10 by way of non-limiting example, the upper surface 20 of the first head 13 of the insert 11 is flat.

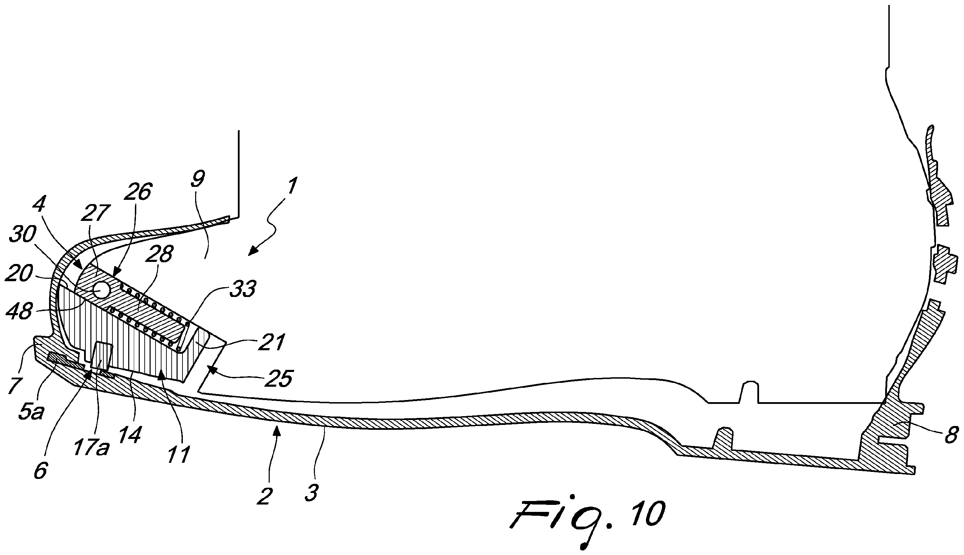

In the specific embodiment shown in Figures 10 and 11 by way of non-limiting example, the upper surface 120 of the first head 113 of the insert 111 is arc-shaped with the concavity facing away from the sole 3.

At the first lower surface 14 of the insert 11, 111 there are at least two blind cylindrical first seats 15a, 15b, which have the same diameter and the same length, are arranged along a same chord that is parallel to the diameter 16 of the semi-circumference of the insert 11, 111 and is arranged proximate to the end that lies opposite the diameter 16.

The first seats 15a, 15b are adapted to accommodate two complementarily-shaped cylindrical bevel-free first pins 17a, 17b which are slightly longer than the length of the first seats 15a, 15b so that the first pins 17a, 17b, once accommodated in the first seats 15a, 15b, protrude externally and downward from the first lower surface 14 of the insert 11, 111.

The first pins 17a, 17b are adapted to be positioned and to interact selectively with the first holes 6 of the metal plates 5a, 5b of the shell 2.

There are also two blind cylindrical second seats 18a, 18b at the first lower surface 14 of the insert 11, 111, which have different diameters and different lengths and are arranged between the first seats 15a, 15b and at a different chord.

The second seats 18a, 18b are adapted to accommodate two complementarily-shaped cylindrical second pins 19a, 19b, which have the same length as the corresponding second seat 18a, 18b so that the second pins 19a, 19b, once accommodated in the second seats 18a, 18b, are arranged substantially flush with the first lower surface 14 of the insert 11, 111.

The second pins 19a, 19b are adapted to contribute to the correct positioning of the first pins 17a, 17b in the first seats 15a, 15b, since they constitute an element for abutment against those plates 5a, 5b.

The first head 13, 113 of the insert 11, 111 is provided stably, at its first upper surface 20, 120 and in a region adjacent to the diameter 16, with a tab or lug 21 that protrudes externally and at right angles to the first head 13, 113.

The tab 21 has a preferably substantially curved shape structure in plan view.

Axially to the main body 9, at the surface defined by the recess 10 and starting from the front perimetric edge 22 of the main body 9, there is a central cavity 23, which is semicircular and is as deep as the insert 11, 111 and is closed off, on the opposite side with respect to the front perimetric edge 22, by the tab 21.

Once the insert 11, 111 has been arranged adjacent to the second lower surface 24 of the main body 9, the central cavity 23 defines, together with the first upper surface 20, 120 of the first head 13, 113 of the insert 11, 111, a third seat 25 in which a first pintle 26, 126 is positioned.

The first pintle 26, 126 is substantially T-shaped, a shape adapted to define a second head 27, 127, this second head being adapted to be positioned with one end flush with the front surface 34 of the insert 11, 111 on the opposite side from the tab 21 and to be associated stably with the main body 9 of the last 1, 101, and a first shank 28 which is adapted to extend in the direction of the tab 21.

The second head 27, 127 of the first pintle 26, 126 has a third lower surface 48, 148 which is shaped substantially complementarily to the corresponding first upper surface 20, 120 of the insert 11, 111.

In the specific embodiment shown from Figure 1 to Figure 10 by way of non-limiting example, the third lower surface 48 of the second head 27 of the first pintle 26 is therefore flat.

In the specific embodiment shown in Figures 10 and 11 by way of non-limiting example, the third lower surface 148 of the second head 127 of the first pintle 126 is therefore curved.

The second head 27, 127 of the first pintle 26, 126 has a transverse second hole 29 which is adapted to accommodate stably a cylindrical second pintle 30, the ends 31a, 31b of which are accommodated stably in transverse fourth seats 32 that are arranged transversely to the third seat 25 of the main body 9 at the toe region 4.

The first shank 28 has a length that is less than the distance between the second head 27, 127 and the tab 21 of the insert 11, 111.

Coaxially to the first shank 28 there is an elastically deformable means 33, such as a cylindrical spring, which has, when inactive, a length that is substantially equal to the distance between the second head 27, 127 and the tab 21 of the insert 11, 111 and therefore a length that is greater than the length of the first shank 28 of the first pintle 26, 126.

Thus, when inactive, the spring forces the second head 27, 127 and therefore all of the insert 11, 111, so that the front perimetric edge 22 of the main body 9 of the last 1, 101 is arranged flush with the front surface 34 of the insert 11, 111, thus creating a continuity of surfaces in the toe region 4 of the last 1, 101.

A plate 35a, 35b is associated slideably with each side of the first head 13, 113 of the insert 11, 111.

Each plate 35a, 35b has substantially the shape structure of a circular segment, so that its outer perimetric edges are arranged flush with the outer perimetric edges 36 of the base 12 of the insert 11, 111, and has a height that is equal to the height of the first head 13, 113 so that their second upper surface 37a, 37b is arranged flush with the first upper surface 20, 120 of the first head 13, 113.

Each plate 35a, 35b is stably associated with the main body 9 of the last 1, 101 and is adapted to guide the movement of the insert 11, 111 with respect to the main body 9 of the last 1, 101.

Each plate 35a, 35b has in fact, at its second upper surface 37a, 37b, one or more blind fifth seats 38a, 38b, 38c, 38d, which are substantially T-shaped, each one adapted to stably accommodate the third head 39a, 39b, 39c, 39d and the base of a second shank 40a, 40b, 40c, 40d of a screw 41a, 41b, 41c, 41d which is shaped complementarily thereto, and one or more cylindrical sixth seats 42a, 42b, 42c, 42d, each one adapted to accommodate a third pin 43a, 43b, 43c, 43d which is shaped complementarily thereto.

The second shanks 40a, 40b, 40c, 40d of the screws 41a, 41b, 41c, 41d and the third pins 43a, 43b, 43c, 43d have a length that is greater than that of the corresponding fifth and sixth seats 38a, 38b, 38c, 38d, 42a, 42b, 42c, 42d.

The threaded first upper ends 44a, 44b, 44c, 44d of the second shanks 40a, 40b, 40c, 40d and the second upper ends 45a, 45b, 45c, 45d of the third pins 43a, 43b, 43c, 43d are advantageously accommodated stably in seventh and eighth seats 46a, 46b, 47a, 47b, which are provided at the second lower surface 24 of the main body 9 of the last 1, 101.

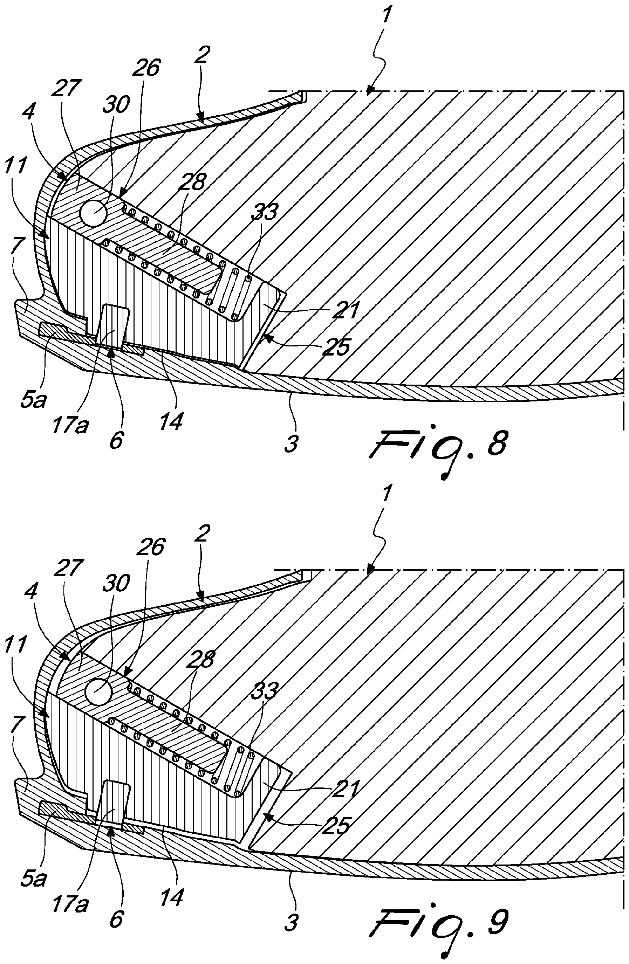

Use of the solution is the following: once the process of thermoforming the plastic material in order to obtain the shell 2 is finished, the step of unseating the last 1, 101 from the shell 2 begins, as shown in Figures 8 and 9.

During the unseating, there is an initial locking in place of the first pins 17a, 17b at the first holes 6 of the metal plates 5a, 5b of the shell 2; in this way, the insert 11, 111 is kept in a fixed position while the operator begins to unseat the last 1, 101; in the first step, shown in Figure 8, the main body 9 of the last 1, 101 slides with respect to the insert 11, 111, which remains fixed, along the plane that is inclined at an angle α (alpha); in this step the elastically deformable means 33 begins to be compressed as a consequence of the sliding of the first upper surface 20, 120 of the first head 13, 113 of the insert 11, 111 on the third lower surface 48, 148 of the second head 27, 127 of the first pintle 26, 126, along an inclined plane or a curved plane.

The sliding of the main body 9 of the last 1, 101 occurs in a stable and precise manner by virtue of the presence of the plates 35a, 35b, which are stably connected to the main body 9 of the last 1, 101 by virtue of the screws 41a, 41b, 41c, 41d and the third pins 43a, 43b, 43c, 43d, which make it possible to keep to the positional tolerances required by the reference standard in order to ensure the correct operation of alpine ski bindings.

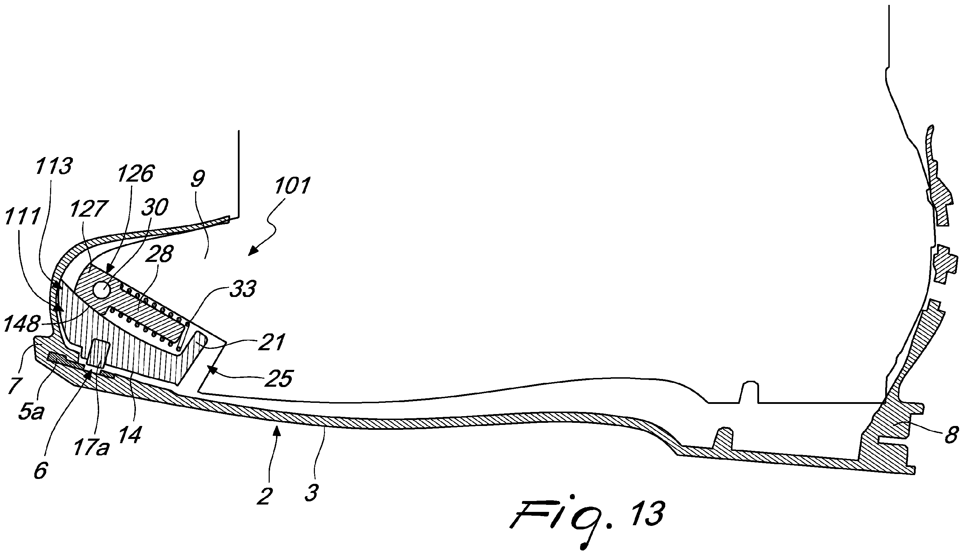

Subsequently the sliding of the main body 9 with respect to the insert 11, 111, as shown in Figure 9, makes it possible to obtain the necessary spaces for the first pins 17a, 17b to begin to rise from the holes 6 of the metal plates 5a, 5b until they are released completely, as shown in Figure 10 and in Figure 13, without creating effort or friction in the metal plates 5a, 5b and without causing deformations in the shell 2.

Furthermore, when the first pins 17a, 17b are released from the metal plates 5a, 5b the elastically deformable means 33 automatically return the insert 11, 111 to its original position inside the third seat 25 and adjacent to the recess 10 of the main body 9 of the last 1, 101, as shown in Figure 11, thus allowing the extraction of the last 1, 101 from the shell 2 when the last 1, 101 reaches an inclination at an angle β (beta) that is adapted to allow its complete extraction from the shell 2.

Thus it has been found that the invention fully achieves the intended aim and objects, a last 1, 101 having been provided for obtaining a shell 2 of a boot provided with a rigid sole 3 which can be unseated from that shell 2 rapidly and simply, while at the same time keeping the shell 2 intact and free from deformations during the step of unseating, thus obtaining a high quality and safety of that shell 2.

It has furthermore been found that the last 1, 101 reduces the times for producing and unseating the shell 2.

It has furthermore been found that the last thus provided reduces the production costs of the shell 2, by limiting the number of discards.

It has finally been found that the last 1, 101 makes it possible to obtain a shell 2 that ensures an optimal and safe coupling with the bindings associated with skis.

Naturally the materials used as well as the dimensions of the individual components of the invention may be more relevant according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A last (1, 101) for obtaining a shell (2) of a boot provided with a rigid sole (3) and, in the toe region (4), at least one metal plate (5a, 5b), **characterized in that** it comprises a main body (9) with which an insert (11, 111) is slideably associated, at said toe region (4), and can slide with respect to said main body (9) along a plane that is inclined by a different angle to the normal angle of extraction of said last (1, 101) from said shell (2), at least two bevel-free first pins (17a, 17b) protruding downward from said insert (11, 111) and interacting selectively with said at least one metal plate (5a, 5b).

2. The last (1, 101) according to claim 1, **characterized in that** it has a shape structure that substantially corresponds to the shape structure of the inside of said shell (2) of a boot and therefore lacks the toe unit (7) and the heel unit (8), said last (1, 101) being constituted by said main body (9), which reproduces the internal shape structure of said shell (2) except for part of said region (4), which corresponds to the toe of the foot, in which a flat recess (10) is obtained at which said insert (11, 111), which is shaped complementarily to said region (4), is slideably associated.

3. The last (1, 101) according to claim 1, **characterized in that** said insert (11, 111), has, in a transverse cross-section, a base (12) with a substantially rectangular shape structure from which a first head (13, 113) protrudes axially with a shape structure, in a transverse cross-section, substantially like an upside-down isosceles trapezoid, whereas in plan view said insert (11, 111) has a substantially semicircular shape structure.

4. The last (1, 101) according to one or more of the preceding claims, **characterized in that** at the first lower surface (14) of said insert (11, 111) at least two blind cylindrical first seats (15a, 15b), which have the same diameter and the same length, are arranged along a same chord that is parallel to the diameter (16) of the semi-circumference of said insert (11, 111), and are arranged proximate to the end that lies opposite said diameter (16), said first seats (15a, 15b) being adapted to accommodate said complementarily-shaped cylindrical bevel-free first pins (17a, 17b) which are slightly longer than the length of said first seats (15a, 15b) so that said first pins (17a, 17b), once accommodated in said first seats (15a, 15b), protrude externally and downward from said first lower surface (14) of said insert (11, 111), said first pins (17a, 17b) being adapted to be positioned and to interact selectively with first holes (6), which are provided in said metal plates (5a, 5b) of said shell (2) and are accessible from the inside of said shell (2).

5. The last (1, 101) according to one or more of the preceding claims, **characterized in that** there are two blind cylindrical second seats (18a, 18b) at said first lower surface (14) of said insert (11, 111), which have different diameters and lengths and are arranged between said first seats (15a, 15b) and at a different chord, said second seats (18a, 18b) being adapted to accommodate two complementarily-shaped cylindrical second pins (19a, 19b), which have the same length as the corresponding said second seat (18a, 18b) so that said second pins (19a, 19b), once accommodated in said second seats (18a, 18b), are arranged substantially flush with said first lower surface (14) of said insert (11, 111), said second pins (19a, 19b) being adapted to contribute to the correct positioning of said first pins (17a, 17b) in said first seats (15a, 15b) since they constitute an element for abutment against said plates (5a, 5b).

6. The last (1, 101) according to one or more of the preceding claims, **characterized in that** said first head (13, 113) of said insert (11, 111) is provided stably, at its first upper surface (20, 120) and in a region adjacent to said diameter (16), with a tab or lug (21) that protrudes externally and at right angles to said first head (13, 113), said tab (21) having a substantially curved shape structure in plan view.

7. The last (1, 101) according to one or more of the preceding claims, **characterized in that**, axially to said main body (9), at the surface defined by said recess (10) and starting from the front perimetric edge (22) of said main body (9), there is a central cavity (23), which is semicircular and is as deep as said insert (11, 111) and is closed off, on the opposite side with respect to said front perimetric edge (22), by said tab (21), once said insert (11, 111) has been arranged adjacent to the second lower surface (24) of said main body (9) said central cavity (23) defining, together with said first upper surface (20, 120) of said first head (13, 113) of said insert (11, 111), a third seat (25) in which a first pintle (26, 126) is positioned.

8. The last (1, 101) according to one or more of the preceding claims, **characterized in that** said first pintle (26, 126) is substantially T-shaped, a shape adapted to define a second head (27, 127), said second head being adapted to be positioned with one end flush with the front surface (34) of said insert (11, 111) on the opposite side from said tab (21) and to be associated stably with said main body (9) of said last (1, 101), and a first shank (28) which is adapted to extend in the direction of said tab (21), said second head (27, 127) of said first pintle (26, 126) having a third lower surface (48, 148) that is shaped substantially complementarily to said corresponding first upper surface (20, 120) of said insert (11, 111), said second head (27, 127) of said first pintle (26, 126) having a transverse second hole (29) which is adapted to accommodate stably a cylindrical second pintle (30), the ends (31a, 31b) of which are accommodated stably in transverse fourth seats (32) that are arranged transversely to said third seat (25) of said main body (9) at said toe region (4).

9. The last (1, 101) according to one or more of the preceding claims, **characterized in that** said first shank (28) has a length that is less than the distance between said second head (27, 127) and said tab (21) of said insert (11, 111), coaxially to said first shank (28) there being an elastically deformable means (33) which has, when inactive, a length that is substantially equal to the distance between said second head (27, 127) and said tab (21) of said insert (11, 111) and therefore a length that is greater than the length of said first shank (28) of said first pintle (26, 126), said elastically deformable means (33), when inactive, forcing said second head (27, 127), and therefore all of said insert (11, 111), so that said front perimetric edge (22) of said main body (9) of said last (1, 101) is arranged flush with said front surface (34) of said insert (11, 111), thus creating a continuity of surfaces in said toe region (4) of said last (1, 101).

10. The last (1, 101) according to one or more of the preceding claims, **characterized in that** a plate (35a, 35b) is associated slideably with each side of said first head (13, 113) of said insert (11, 111), each one of said plates (35a, 35b) having substantially the shape structure of a circular segment, so that its outer perimetric edges are arranged flush with the outer perimetric edges (36) of said base (12) of said insert (11, 111), and having a height that is equal to the height of said first head (13, 113) so that their second upper surface (37a, 37b) is arranged flush with said first upper surface (20, 120) of said first head (13, 113).

11. The last (1, 101) according to one or more of the preceding claims, **characterized in that** each one of said plates (35a, 35b) is stably associated with said main body (9) of said last (1, 101) and is adapted to guide the movement of said insert (11, 111) with respect to said main body (9) of said last (1, 101), each plate (35a, 35b) having, at said second upper surface (37a, 37b), one or more blind fifth seats (38a, 38b, 38c, 38d), which are substantially T-shaped, each one adapted to stably accommodate a third head (39a, 39b, 39c, 39d) and a base of a second shank (40a, 40b, 40c, 40d) of a screw (41a, 41b, 41c, 41d) which is shaped complementarily thereto, and one or more cylindrical sixth seats (42a, 42b, 42c, 42d), each one adapted to accommodate a third pin (43a, 43b, 43c, 43d) which is shaped complementarily thereto.

12. The last (1, 101) according to one or more of the preceding claims, **characterized in that** said second shanks (40a, 40b, 40c, 40d) of said screws (41a, 41b, 41c, 41d) and said third pins (43a, 43b, 43c, 43d) have a length that is greater than that of the corresponding said fifth and sixth seats (38a, 38b, 38c, 38d, 42a, 42b, 42c, 42d), the threaded first upper ends (44a, 44b, 44c, 44d) of said second shanks (40a, 40b, 40c, 40d) and the second upper ends (45a, 45b, 45c, 45d) of said third pins (43a, 43b, 43c, 43d) being accommodated stably in seventh and eighth seats (46a, 46b, 47a, 47b), which are provided at said second lower surface (24) of said main body (9) of said last.

13. The last (1) according to one or more of the preceding claims, **characterized in that** said upper surface (20) of said first head (13) of said insert (11) and said third lower surface (48) of said second head (27) of said first pintle (26) are flat.

14. The last (101) according to one or more of the preceding claims, **characterized in that** said upper surface (120) of said first head (113) of said insert (111) and said third lower surface (148) of said second head (127) of said first pintle (126) are arc-shaped with the concavity facing away from said sole (3).

## Patentansprüche

1. Leisten (1, 101) zum Erhalten einer Schale (2) eines Stiefels mit einer steifen Sohle (3) und mit mindestens einer Metallplatte (5a, 5b) im Zehenbereich (4), **dadurch gekennzeichnet, dass** er einen Hauptkörper (9) aufweist, mit dem ein Einsatz (11, 111) an dem Zehenbereich (4) gleitend verbunden ist, und bezüglich des Hauptkörpers (9) entlang einer Ebene gleiten kann, die in einem unterschiedlichen Winkel zum normalen Entnahmewinkel des Leistens (1, 101) von der Schale (2) geneigt ist, wobei mindestens zwei nicht abgeschrägte erste Stifte (17a, 17b) von dem Einsatz (11, 111) nach unten vorstehen und selektiv mit der mindestens einen Metallplatte (5a, 5b) interagieren.

2. Leisten (1, 101) nach Anspruch 1, **dadurch gekennzeichnet, dass** er eine Formstruktur hat, die im Wesentlichen der Formstruktur des Inneren der Schale (2) eines Stiefels entspricht, und der daher die Zeheneinheit (7) und die Ferseneinheit (8) fehlt, wobei der Leisten (1, 101) durch den Hauptkörper (9) gebildet wird, der die innere Formstruktur der Schale (2) außer eines Teils des Bereichs (4), der dem Zeh des Fußes entspricht, nachbildet, in dem eine flache Ausnehmung (10) vorgesehen ist, mit der der Einsatz (11, 111), der komplementär zu dem Bereich (4) geformt ist, gleitend verbunden ist.

3. Leisten (1, 101) nach Anspruch 1, **dadurch gekennzeichnet, dass** der Einsatz (11, 111) in einem querlaufenden Querschnitt eine Basis (12) mit einer im Wesentlichen rechteckigen Formstruktur hat, von welcher ein erster Kopf (13, 113) axial mit einer Formstruktur vorsteht, die in einem querlaufenden Querschnitt im Wesentlichen wie ein umgekehrtes gleichschenkliges Trapez ist, während der Einsatz (11, 111) in Draufsicht eine im Wesentlichen halbkreisförmige Formstruktur hat.

4. Leisten (1, 101) nach einem oder mehreren der vorhergehenden Ansprüche, **dadurch gekennzeichnet, dass** an der ersten unteren Oberfläche (14) des Einsatzes (11, 111) mindestens zwei zylindrische erste Blindsitze (15a, 15b), die denselben Durchmesser und dieselbe Länge haben, entlang derselben Sehne angeordnet sind, die parallel zu dem Durchmesser (16) des Halbumfangs des Einsatzes (11, 111) ist, und nahe dem Ende angeordnet sind, das gegenüber dem Durchmesser (16) liegt, wobei die ersten Sitze (15a, 15b) dazu ausgelegt sind, die komplementär geformten zylindrischen nicht abgeschrägten ersten Stifte (17a, 17b) aufzunehmen, die geringfügig länger sind als die Länge der ersten Sitze (15a, 15b), so dass die ersten Stifte (17a, 17b), sobald sie in den ersten Sitzen (15a, 15b) aufgenommen sind, von der ersten unteren Oberfläche (14) des Einsatzes (11, 111) nach außen und unten vorstehen, wobei die ersten Stifte (17a, 17b) dazu ausgelegt sind, selektiv mit ersten Löchern (6), die in den Metallplatten (5a, 5b) der Schale (2) vorgesehen und vom Inneren der Schale (2) zugänglich sind, positioniert zu werden und zu interagieren.

5. Leisten (1, 101) nach einem oder mehreren der vorhergehenden Ansprüche, **dadurch gekennzeichnet, dass** an der ersten unteren Oberfläche (14) des Einsatzes (11, 111) zwei zylindrische zweite Blindsitze (18a, 18b) vorhanden sind, die unterschiedliche Durchmesser und Längen haben, und die zwischen den ersten Sitzen (15a, 15b) und an einer anderen Sehne angeordnet sind, wobei die zweiten Sitze (18a, 18b) dazu ausgelegt sind, zwei komplementär geformte zylindrische zweite Stifte (19a, 19b) aufzunehmen, die dieselbe Länge haben wie der korrespondierende zweite Sitz (18a, 18b), so dass die zweiten Stifte (19a, 19b), sobald sie in den zweiten Sitzen (18a, 18b) aufgenommen sind, im Wesentlichen fluchtend mit der ersten unteren Oberfläche (14) des Einsatzes (11, 111) angeordnet sind, wobei die zweiten Stifte (19a, 19b) dazu ausgelegt sind, zum korrekten Positionieren der ersten Stifte (17a, 17b) in den ersten Sitzen (15a, 15b) beizutragen, weil sie ein Element zum Anschlagen gegen die Platten (5a, 5b) darstellen.

6. Leisten (1, 101) nach einem oder mehreren der vorhergehenden Ansprüche, **dadurch gekennzeichnet, dass** der erste Kopf (13, 113) des Einsatzes (11, 111) stabil an seiner ersten oberen Oberfläche (20, 120) und in einem Bereich nahe dem Durchmesser (16) vorgesehen ist, mit einer Lasche oder Öse (21), die nach außen und im rechten Winkel zu dem ersten Kopf (13, 113) vorsteht, wobei die Lasche (21) in Draufsicht eine im Wesentlichen gebogene Formstruktur hat.

7. Leisten (1, 101) nach einem oder mehreren der vorhergehenden Ansprüche, **dadurch gekennzeichnet, dass** axial zu dem Hauptkörper (9) an der durch die Ausnehmung (10) definierten Oberfläche und ausgehend von der vorderen Umfangskante (22) des Hauptkörpers (9) ein mittiger Hohlraum (23) vorgesehen ist, der halbkreisförmig und so tief wie der Einsatz (11, 111) ist und an der gegenüberliegenden Seite bezüglich der vorderen Umfangskante (22) durch die Lasche (21) abgeschlossen ist, sobald der Einsatz (11, 111) nahe der zweiten unteren Oberfläche (24) des Hauptkörpers (9) angeordnet ist, wobei der mittige Hohlraum (23) zusammen mit der ersten oberen Oberfläche (20, 120) des ersten Kopfs (13, 113) des Einsatzes (11, 111) einen dritten Sitz (25) definiert, in dem ein erster Zapfen (26, 126) positioniert ist.

8. Leisten (1, 101) nach einem oder mehreren der vorhergehenden Ansprüche, **dadurch gekennzeichnet, dass** der erste Zapfen (26, 126) im Wesentlichen T-förmig ist, eine Form, die dazu ausgelegt ist, einen zweiten Kopf (27, 127) zu definieren, wobei der zweite Kopf dazu ausgelegt ist, mit einem Ende fluchtend mit der vorderen Oberfläche (34) des Einsatzes (11, 111) an der gegenüberliegenden Seite von der Lasche (21) positioniert zu werden und stabil mit dem Hauptkörper (9) des Leistens (1, 101) verbunden zu werden, und einem ersten Schaft (28), der dazu ausgelegt ist, sich in Richtung der Lasche (21) zu erstrecken, wobei der zweite Kopf (27, 127) des ersten Zapfens (26, 126) eine dritte untere Oberfläche (48, 148) hat, die im Wesentlichen komplementär zu der korrespondierenden ersten oberen Oberfläche (20, 120) des Einsatzes (11, 111) geformt ist, wobei der zweite Kopf (27, 127) des ersten Zapfens (26, 126) ein querlaufendes zweites Loch (29) hat, das dazu ausgelegt ist, einen zylindrischen zweiten Zapfen (30) stabil aufzunehmen, dessen Enden (31a, 31b) stabil in querlaufenden vierten Sitzen (32) aufgenommen sind, die quer zu dem dritten Sitz (25) des Hauptkörpers (9) an dem Zehenbereich (4) angeordnet sind.

9. Leisten (1, 101) nach einem oder mehreren der vorhergehenden Ansprüche, **dadurch gekennzeichnet, dass** der erste Schaft (28) eine Länge hat, die kürzer ist als der Abstand zwischen dem zweiten Kopf (27, 127) und der Lasche (21) des Einsatzes (11, 111), wobei koaxial zu dem ersten Schaft (28) ein elastisch verformbares Mittel (33) vorgesehen ist, das, wenn es inaktiv ist, eine Länge hat, die im Wesentlichen gleich dem Abstand zwischen dem zweiten Kopf (27, 127) und der Lasche (21) des Einsatzes (11, 111) ist, und daher eine Länge, die länger als die Länge des ersten Schafts (28) des ersten Zapfens (26, 126) ist, wobei das elastisch verformbare Mittel (33), wenn es inaktiv ist, den zweiten Kopf (27, 127) und daher den gesamten Einsatz (11, 111) zwingt, so dass die vordere Umfangskante (22) des Hauptkörpers (9) des Leistens (1, 101) fluchtend mit der vorderen Oberfläche (34) des Einsatzes (11, 111) angeordnet ist und somit eine Kontinuität der Oberflächen in dem Zehenbereich (4) des Leistens (1, 101) erzeugt.

10. Leisten (1, 101) nach einem oder mehreren der vorhergehenden Ansprüche, **dadurch gekennzeichnet, dass** eine Platte (35a, 35b) gleitend mit jeder Seite des ersten Kopfs (13, 113) des Einsatzes (11, 111) verbunden ist, wobei jede der Platten (35a, 35b) im Wesentlichen die Formstruktur eines kreisförmigen Segments hat, so dass ihre äußeren Umfangskanten fluchtend mit den äußeren Umfangskanten (36) der Basis (12) des Einsatzes (11, 111) angeordnet sind, und eine Höhe hat, die gleich der Höhe des ersten Kopfs (13, 113) ist, so dass ihre zweite obere Oberfläche (37a, 37b) fluchtend mit der ersten oberen Oberfläche (20, 120) des ersten Kopfs (13, 113) angeordnet ist.

11. Leisten (1, 101) nach einem oder mehreren der vorhergehenden Ansprüche, **dadurch gekennzeichnet, dass** jede der Platten (35a, 35b) stabil mit dem Hauptkörper (9) des Leistens (1, 101) verbunden und dazu ausgelegt ist, die Bewegung des Einsatzes (11, 111) bezüglich des Hauptkörpers (9) des Leistens (1, 101) zu führen, wobei jede Platte (35a, 35b) an der zweiten oberen Oberfläche (37a, 37b) einen oder mehrere fünfte Blindsitze (38a, 38b, 38c, 8d) hat, die im Wesentlichen T-förmig sind, und von denen jeder dazu ausgelegt ist, einen dritten Kopf (39a, 39b, 39c, 39d) und eine Basis eines zweiten Schafts (40a, 40b, 40c, 40d) einer Schraube (41a, 41b, 41c, 41d), die komplementär dazu geformt ist, stabil aufzunehmen, und einen oder mehrere zylindrische sechste Sitze (42a, 42b, 42c, 42d), von denen jeder dazu ausgelegt ist, einen dritten Stift (43a, 43b, 43c, 43d) aufzunehmen, der komplementär dazu geformt ist.

12. Leisten (1, 101) nach einem oder mehreren der vorhergehenden Ansprüche, **dadurch gekennzeichnet, dass** die zweiten Schäfte (40a, 40b, 40c, 40d) der Schrauben (41a, 41b, 41c, 41d) und die dritten Stifte (43a, 43b, 43c, 43d) eine Länge haben, die länger als diejenige der korrespondierenden fünften und sechsten Sitze (38a, 38b, 38c, 38d, 42a, 42b, 42c, 42d) ist, wobei die mit Gewinde versehenen ersten oberen Enden (44a, 44b, 44c, 44d) der zweiten Schäfte (40a, 40b, 40c, 40d) und die zweiten oberen Enden (45a, 45b, 45c, 45d) der dritten Stifte (43a, 43b, 43c, 43d) stabil in siebten und achten Sitzen (46a, 46b, 47a, 47b) aufgenommen sind, die an der zweiten unteren Oberfläche (24) des Hauptkörpers (9) des Leistens vorgesehen sind.

13. Leisten (1) nach einem oder mehreren der vorhergehenden Ansprüche, **dadurch gekennzeichnet, dass** die obere Oberfläche (20) des ersten Kopfs (13) des Einsatzes (11) und die dritte untere Oberfläche (48) des zweiten Kopfs (27) des ersten Zapfens (26) flach sind.

14. Leisten (101) nach einem oder mehreren der vorhergehenden Ansprüche, **dadurch gekennzeichnet, dass** die obere Oberfläche (120) des ersten Kopfs (113) des Einsatzes (111) und die dritte untere Oberfläche (148) des zweiten Kopfs (127) des ersten Zapfens (126) bogenförmig sind, wobei die Konkavität von der Sohle (3) weg weist.

## Revendications

1. Forme (1, 101) pour obtenir une coque (2) d'une chaussure pourvue d'une semelle rigide (3) et, dans la région d'orteil (4), d'au moins une plaque métallique (5a, 5b), **caractérisée en ce qu'**elle comporte un corps principal (9) auquel un insert (11, 111) est associé de manière coulissante, au niveau de ladite région d'orteil (4), et peut coulisser par rapport audit corps principal (9) le long d'un plan qui est incliné d'un angle différent par rapport à l'angle d'extraction normal de ladite forme (1, 101) de ladite coque (2), au moins deux premières goupilles sans biseau (17a, 17b) faisant saillie vers le bas à partir dudit insert (11, 111) et interagissant sélectivement avec ladite au moins une plaque métallique (5a, 5b).

2. Forme (1, 101) selon la revendication 1, **caractérisée en ce qu'**elle a une structure de forme qui correspond sensiblement à la structure de forme de l'intérieur de ladite coque (2) d'une chaussure et est donc dépourvue de l'unité d'orteil (7) et de l'unité de talon (8), ladite forme (1, 101) étant constituée dudit corps principal (9), qui reproduit la structure de forme interne de ladite coque (2) sauf pour une partie de ladite région (4), qui correspond à l'orteil du pied, dans laquelle un évidement plat (10) est obtenu auquel ledit insert (11, 111), qui est formé de manière complémentaire à ladite région (4), est associé de manière coulissante.

3. Forme (1, 101) selon la revendication 1, **caractérisée en ce que** ledit insert (11, 111) a, dans une coupe transversale, une base (12) avec une structure de forme sensiblement rectangulaire à partir de laquelle une première tête (13, 113) fait saillie axialement avec une structure de forme, dans une coupe transversale, sensiblement analogue à un trapézoïde isocèle à l'envers, alors qu'en vue de dessus, ledit insert (11, 111) a une structure de forme sensiblement semi-circulaire.

4. Forme (1, 101) selon une ou plusieurs des revendications précédentes, **caractérisée en ce que** sur la première surface inférieure (14) dudit insert (11, 111), au moins deux premiers sièges cylindriques borgnes (15a, 15b), qui ont le même diamètre et la même longueur, sont agencés le long d'une même corde qui est parallèle au diamètre (16) de la semi-circonférence dudit insert (11, 111), et sont agencés à proximité de l'extrémité qui se situe à l'opposé dudit diamètre (16), lesdits premiers sièges (15a, 15b) étant adaptés pour recevoir lesdites premières goupilles cylindriques sans biseau formées de manière complémentaire (17a, 17b) qui sont légèrement plus longues que la longueur desdits premiers sièges (15a, 15b) de sorte que lesdites premières goupilles (17a, 17b), une fois reçues dans lesdits premiers sièges (15a, 15b), font saillie extérieurement et vers le bas à partir de ladite première surface inférieure (14) dudit insert (11, 111), lesdites premières goupilles (17a, 17b) étant adaptées pour être positionnées et pour interagir sélectivement avec des premiers trous (6), qui sont agencés dans lesdites plaques métalliques (5a, 5b) de ladite coque (2) et sont accessibles depuis l'intérieur de ladite coque (2).

5. Forme (1, 101) selon une ou plusieurs des revendications précédentes, **caractérisée en ce qu'**il y a deux deuxièmes sièges cylindriques borgnes (18a, 18b) sur ladite première surface inférieure (14) dudit insert (11, 111), qui ont différents diamètres et différentes longueurs et sont agencés entre lesdits premiers sièges (15a, 15b) et sur une corde différente, lesdits deuxièmes sièges (18a, 18b) étant adaptés pour recevoir deux deuxièmes goupilles cylindriques formées de manière complémentaire (19a, 19b), qui ont la même longueur que lesdits deuxièmes sièges (18a, 18b) correspondants de sorte que lesdites deuxièmes goupilles (19a, 19b), une fois reçues dans lesdits deuxièmes sièges (18a, 18b), sont agencées de manière sensiblement affleurante à ladite première surface inférieure (14) dudit insert (11, 111), lesdites deuxièmes goupilles (19a, 19b) étant adaptées pour contribuer au positionnement correct desdites premières goupilles (17a, 17b) dans lesdits premiers sièges (15a, 15b) car elles constituent un élément de butée contre lesdites plaques (5a, 5b).

6. Forme (1, 101) selon une ou plusieurs des revendications précédentes, **caractérisée en ce que** ladite première tête (13, 113) dudit insert (11, 111) est agencée de manière stable, sur sa première surface supérieure (20, 120) et dans une zone adjacente audit diamètre (16), avec un ergot ou un téton (21) qui fait saillie extérieurement et à angles droits par rapport à ladite première tête (13, 113), ledit ergot (21) ayant une structure de forme sensiblement incurvée en vue de dessus.

7. Forme (1, 101) selon une ou plusieurs des revendications précédentes, **caractérisée en ce que**, axialement audit corps principal (9), sur la surface définie par ledit évidement (10) et en partant du bord périmétrique avant (22) dudit corps principal (9), il y a une cavité centrale (23), qui est semi-circulaire et est aussi profonde que ledit insert (11, 111) et est fermée, sur le côté opposé par rapport audit bord périmétrique avant (22), par ledit ergot (21), une fois que ledit insert (11, 111) a été agencé au voisinage de la deuxième surface inférieure (24) dudit corps principal (9), ladite cavité centrale (23) définissant, en association avec ladite première surface supérieure (20, 120) de ladite première tête (13, 113) dudit insert (11, 111), un troisième siège (25) dans lequel un premier pivot (26, 126) est positionné.

8. Forme (1, 101) selon une ou plusieurs des revendications précédentes, **caractérisée en ce que** ledit premier pivot (26, 126) est sensiblement en forme de T, une forme adaptée pour définir une deuxième tête (27, 127), ladite deuxième tête étant adaptée pour être positionnée avec une extrémité affleurante à la surface avant (34) dudit insert (11, 111) sur le côté opposé par rapport audit ergot (21) et pour être associée de manière stable audit corps principal (9) de ladite forme (1, 101), et une première tige (28) qui est adaptée pour s'étendre dans la direction dudit ergot (21), ladite deuxième tête (27, 127) dudit premier pivot (26, 126) ayant une troisième surface inférieure (48, 148) qui est formée de manière sensiblement complémentaire à ladite première surface supérieure (20, 120) correspondante dudit insert (11, 111), ladite deuxième tête (27, 127) dudit premier pivot (26, 126) ayant un second trou transversal (29) qui est adapté pour recevoir de manière stable un second pivot cylindrique (30), dont les extrémités (31a, 31b) sont reçues de manière stable dans des quatrièmes sièges transversaux (32) qui sont agencés transversalement audit troisième siège (25) dudit corps principal (9) sur ladite région d'orteil (4).

9. Forme (1, 101) selon une ou plusieurs des revendications précédentes, **caractérisée en ce que** ladite première tige (28) a une longueur qui est inférieure à la distance entre ladite deuxième tête (27, 127) et ledit ergot (21) dudit insert (11, 111), coaxialement à ladite première tige (28) étant prévus des moyens élastiquement déformables (33) qui ont, lorsqu'ils sont inactifs, une longueur qui est sensiblement égale à la distance entre ladite deuxième tête (27, 127) et ledit ergot (21) dudit insert (11, 111) et donc une longueur qui est supérieure à la longueur de ladite première tige (28) dudit premier pivot (26, 126), lesdits moyens élastiquement déformables (33), lorsqu'ils sont inactifs, forçant ladite deuxième tête (27, 127), et donc la totalité dudit insert (11, 111), de sorte que ledit bord périmétrique avant (22) dudit corps principal (9) de ladite forme (1, 101) est agencé affleurant à ladite surface avant (34) dudit insert (11, 111), en créant ainsi une continuité de surfaces dans ladite région d'orteil (4) de ladite forme (1, 101) .

10. Forme (1, 101) selon une ou plusieurs des revendications précédentes, **caractérisée en ce qu'**une plaque (35a, 35b) est associée de manière coulissante à chaque côté de ladite première tête (13, 113) dudit insert (11, 111), chacune desdites plaques (35a, 35b) ayant pratiquement la structure de forme d'un segment circulaire, de sorte que ses bords périmétriques extérieurs sont agencés affleurants aux bords périmétriques extérieurs (36) de ladite base (12) dudit insert (11, 111), et ayant une hauteur qui est égale à la hauteur de ladite première tête (13, 113) de sorte que leur seconde surface supérieure (37a, 37b) est agencée affleurante à ladite première surface supérieure (20, 120) de ladite première tête (13, 113).

11. Forme (1, 101) selon une ou plusieurs des revendications précédentes, **caractérisée en ce que** chacune desdites plaques (35a, 35b) est associée de manière stable audit corps principal (9) de ladite forme (1, 101) et est adaptée pour guider le mouvement dudit insert (11, 111) par rapport audit corps principal (9) de ladite forme (1, 101), chaque plaque (35a, 35b) ayant, sur ladite seconde surface supérieure (37a, 37b), un ou plusieurs cinquièmes sièges borgnes (38a, 38b, 38c, 38d), qui sont sensiblement en forme de T, chacun étant adapté pour recevoir de manière stable une troisième tête (39a, 39b, 39c, 39d) et une base d'une seconde tige (40a, 40b, 40c, 40d) d'une vis (41a, 41b, 41c, 41d) qui est formée de manière complémentaire à celle-ci, et un ou plusieurs sixièmes sièges cylindriques (42a, 42b, 42c, 42d), chacun étant adapté pour recevoir une troisième goupille (43a, 43b, 43c, 43d) qui est formée de manière complémentaire à celle-ci.

12. Forme (1, 101) selon une ou plusieurs des revendications précédentes, **caractérisée en ce que** lesdites secondes tiges (40a, 40b, 40c, 40d) desdites vis (41a, 41b, 41c, 41d) et lesdites troisièmes goupilles (43a, 43b, 43c, 43d) ont une longueur qui est supérieure à celle desdits cinquièmes et sixièmes sièges (38a, 38b, 38c, 38d, 42a, 42b, 42c, 42d) correspondants, les premières extrémités supérieures filetées (44a, 44b, 44c, 44d) desdites secondes tiges (40a, 40b, 40c, 40d) et les secondes extrémités supérieures (45a, 45b, 45c, 45d) desdites troisièmes goupilles (43a, 43b, 43c, 43d) étant reçues de manière stable dans des septièmes et huitièmes sièges (46a, 46b, 46c, 46d) qui sont agencés sur ladite deuxième surface inférieure (24) dudit corps principal (9) de ladite forme.

13. Forme (1) selon une ou plusieurs des revendications précédentes, **caractérisée en ce que** ladite surface supérieure (20) de ladite première tête (13) dudit insert (11) et ladite troisième surface inférieure (48) de ladite deuxième tête (27) du premier pivot (26) sont planes.

14. Forme (101) selon une ou plusieurs des revendications précédentes, **caractérisée en ce que** ladite surface supérieure (120) de ladite première tête (113) dudit insert (111) et ladite troisième surface inférieure (148) de ladite deuxième tête (127) dudit premier pivot (126) sont en forme d'arc avec la concavité dirigée en s'éloignant de ladite semelle (3).
